# EUROPÄISCHE PATENTSCHRIFT

(11) **EP 1 155 765 B1**
(45) Veröffentlichungstag und Bekanntmachung des Hinweises auf die Patenterteilung: **12.10.2005**
(21) Anmeldenummer: 01109257.4
(22) Anmeldetag: 14.04.2001
(51) Int. Cl.: B23B 31/02

(54) **Verfahren zum kraftschlüssigen Einspannen eines Werkzeuges**
Method for clamping of a tool
Méthode de serrage d' un outil

(30) Priorität: 19.05.2000 DE 10024423
(43) Veröffentlichungstag der Anmeldung: 21.11.2001
(73) Patentinhaber: Bilz Werkzeugfabrik GmbH & Co. KG, 73760 Ostfildern (DE)
(72) Erfinder: Voss, Michael, 71229 Leonberg (DE); Sandkühler, Olaf, 70184 Stuttgart (DE)
(74) Vertreter: Kratzsch, Volkhard

(56) Entgegenhaltungen:
- DE-A- 19 638 808
- DE-C- 19 860 254

## Beschreibung

Die Erfindung bezieht sich auf ein Verfahren zum kraftschlüssigen Einspannen eines Werkzeuges mit seinem Schaft in einer Bohrung einer Werkzeugaufnahme durch Schrumpfen mittels Erhitzung und Abkühlung dieser, bei dem die axiale Einstecktiefe des Schaftes in die Bohrung durch Einstellung vorgegeben wird.

Bei diesem aus DE-A 196 38 808 bekannten Verfahren erfolgt die Erhitzung mit Vorzug induktiv. Bei diesem Verfahren mit thermischer Einspannung von Werkzeugen ist eine hochpräzise Befestigung der Werkzeuge, z. B. Bohrer, Fräser od. dgl., erreichbar. Hierbei wird die Werkzeugaufnahme zumindest im Bereich einer die Bohrung enthaltenden Hülsenpartie erwärmt, so dass sich die Bohrung vergrößert. Das Werkzeug wird mit seinem Schaft in die derart vergrößerte Bohrung eingeführt. Beim anschließenden Abkühlen wird der Schaft des Werkzeuges in der aufgrund der Abkühlung wieder geschrumpften Bohrung der Werkzeugaufnahme kraftschlüssig gehalten. Die Durchmesser der Bohrung der Werkzeugaufnahme und des Schaftes des Werkzeuges sind dabei so gewählt, dass beim Abkühlen eine kraftschlüssige und verdrehfeste Verbindung entsteht,
die beim schnellen Drehen aufgrund der Fliehkräfte nicht gelöst wird. Zum Ausspannen des Werkzeuges wird die Werkzeugaufnahme erneut erwärmt, wobei sich die Bohrung dieser vergrößert, bis das Werkzeug mit seinem Schaft aus der Werkzeugaufnahme herausgezogen werden kann. Das Ausspannen ist nur deshalb möglich, weil die Erwärmung sich von außen nach innen ausbreitet, so dass zunächst nur z. B. die Hülsenpartie der Werkzeugaufnahme erwärmt wird, bevor die Wärme auf den eingespannten Schaft des Werkzeuges gelangt. Dadurch wird erreicht, dass sich zunächst der Hülsenabschnitt dehnt, so dass der noch kältere Schaft des Werkzeuges beim Ausspannen aus der Bohrung gelöst werden kann.

Beim Einspannen des Schaftes des Werkzeuges muss die axiale Einstecktiefe des Schaftes in die Bohrung der Werkzeugaufnahme exakt eingestellt werden, auch unter Berücksichtigung des Umstandes, dass beim anschließenden Abkühlen auch eine Längenänderung geschieht. Es ist bekannt, zum Einspannen eines Werkzeuges zunächst die Werkzeugaufnahme zu erwärmen, bis sich deren Bohrung soweit vergrößert, dass anschließend das Werkzeug mit seinem Schaft in diese eingesteckt werden kann. Hierbei wird die Einstecktiefe beim Einstecken entsprechend einer Vorgabe gewählt, was u. U. auch noch durch einen in die Werkzeugaufnahme integrierten Anschlag zusätzlich vorgegeben werden kann. Dabei erfolgen das Einstecken und und Einstellen der Einstecktiefe im erhitzten Zustand der Werkzeugaufnahme mit einhergehender thermischer Ausdehnung der inneren Aufnahmebohrung. Diese Methode funktioniert nur dann, wenn hierfür während der recht kurzen Erwärmungsphase ausreichend Zeit zur Verfügung steht und wenn Werkzeuge mit geringer thermischer Ausdehnung, z.B. aus Hartmetall oder Keramik, zum Einsatz kommen, da bei diesen Werkzeugmaterialien nicht zu befürchten ist, dass die der Werkzeugaufnahme zugeführte Wärme alsbald beim Übergang auf den Werkzeugschaft zu einer Ausdehnung auch dieses und Klemmung beim Einstecken führen kann.

Es ist ferner bekannt, zunächst eine in der Werkzeugaufnahme enthaltene koaxiale Stellschraube mit Hilfe eines in die Bohrung der Werkzeugaufnahme in deren kaltem Zustand eingeführten Adapters hinsichtlich ihrer axialen Sollposition einzustellen. Die Einstellung kann mittels berührender oder optischer Vermessung z. B. der Spitze des Werkzeuges erfolgen. Nach vollzogener Einstellung der koaxialen Einstellschraube und Entnahme des Adapters erfolgt sodann das Einschrumpfen des Werkzeuges mittels seines Schaftes, wobei bei durch Erwärmung vergrößerter Bohrung der Werkzeugaufnahme das Werkzeug mit seinem Schaft so weit eingesteckt werden kann, bis dieses mit der der Werkzeugspitze gegenüberliegenden Stirnseite des Schaftes axial an der Stellschraube anschlägt. Die Einstellung auf diese Weise ist nicht sehr genau. Es ergeben sich Ungenauigkeiten etwa in der Größenordnung von ± 0,05 mm. Diese Ungenauigkeit resultiert daraus, dass die Werkzeuge hinsichtlich der genannten Stirnseite, die in Kontakt mit der Stellschraube gelangt, nicht genau genug bearbeitet sind. Auch bedeutet die Anordnung einer zur Bohrung koaxialen und dort in eine zentrale Gewindebohrung eingeschraubten Stellschraube einen zusätzlichen Aufwand, wobei auch vom Gewindegang her noch zusätzliche Einstellfehler herrühren können.

Der Erfindung liegt die Aufgabe zugrunde, ein Verfahren der eingangs genannten Art so zu gestalten, dass eine sehr präzise Einstellung der Einstecktiefe der Werkzeuge bei vereinfachtem konstruktiven Aufwand der Werkzeugaufnahme selbst möglich ist und hierbei keine Einschränkung bezüglich der Materialpaarung Werkzeugaufnahme / Werkzeug etwa dahingehend vorliegt, nur Werkzeuge mit geringer thermischer Ausdehnung, z. B. aus Hartmetall, Keramik od. dgl., bei diesem Verfahren einsetzen zu können.

Die Aufgabe ist bei einem Verfahren der eingangs genannten Art gemäß der Erfindung durch die Merkmale im Patentanspruch 1 gelöst. Hierbei erfolgt die Einstellung der Einstecktiefes des Werkzeugschaftes in die Werkzeugaufnahme vor der Erhitzung der Werkzeugaufnahme. Als Maßbezug wird die relevante Schneidengeometrie und nicht etwa die stirnseitige Rückseite des Werkzeugschaftes herangezogen, wodurch eine hochgradig genaue Einstellung möglich ist. Hinsichtlich des Geräteaufwands, insbesondere der Gestaltung der Werkzeugaufnahme, ist eine Vereinfachung dadurch erzielt, dass eine innere Stellschraube mit Gewindebohrung zur Aufnahme dieser entfallen kann, wodurch die Werkzeugaufnahme einfacher und kostengünstiger wird und auch die Gefahr einer etwaigen Verspannung mechanischer Teile entfällt. Vor der Erhitzung der Werkzeugaufnahme wird das bewegliche Kontaktstück am freien Endes des Werkzeuges zur Anlage gebracht und sodann die das Werkzeug gegensinnig, ebenfalls koaxial, beaufschlagende Gegenkraft aktiviert,so dass also das Werkstück axial zwischen dem Kontaktstück und der Gegenkraft gespannt gehalten ist. Wird nun die Erhitzung der Werkzeugaufnahme eingeschaltet mit aufgrund der Erwärmung sich vergrößernder Bohrung der Werkzeugaufnahme, so dringt das Werkzeug mit seinem Schaft in die nun größer gewordene Bohrung der Werkzeugaufnahme ein. Diese Eindringbewegung geschieht entweder bei vertikaler Anordnung aufgrund von Gewichtskräften. Sie kann bei vertikaler Anordnung oder auch bei anderer Raumausrichtung der Anordnung statt dessen von Hand und/oder auch mittels getrieblicher Mittel und/oder mittels eines Stellantriebes od. dgl. erfolgen. Das Eindringen des dabei in beschriebener Weise gespannt gehaltenen Werkzeugschaftes in die Bohrung der Werkzeugaufnahme wird gestoppt sobald das anfangs durch Einstellung vorgegebene Sollmaß erreicht ist. Dieses Abstoppen kann durch mechanisches Anschlagen an einem Anschlag oder in sonstiger Weise geschehen. Wird anschließend daran nun die Erhitzung gestoppt, so kühlt die Werkzeugaufnahme ab, wobei der Werkzeugschaft in der durch Abkühlung geschrumpften Bohrung kraftschlüssig gespannt gehalten wird. Dieses Verfahren gemäß der Erfindung ist gleichermaßen für Werkzeuge mit geringer thermischer Ausdehnung als auch solche mit großer thermischer Ausdehnung geeignet, so dass also sowohl Werkzeuge aus Hartmetall, Keramik od. dgl. als auch solche Werkzeuge gespannt werden können, die aus z. B. Werkzeugstahl bestehen. Bei allem ist zu berücksichtigen, dass die Erhitzungsphase sehr kurzfristig ist und in der Regel nur etwa 5 - 10 Sekunden dauert und die Einstellung des Werkzeuges mitsamt der Werkzeugaufnahme beim Einbringen in letztere während dieser kurzen Zeitspanne und zugleich mit dem Eindringen in die Bohrung der Werkzeugaufnahme geschieht, ohne dass dabei am Werkzeug bzw. Werkzeugschaft in irgendeiner Weise mit mechanischen Einspannhilfen od. dgl. angefasst und gespannt werden muss.

Bei einer vorteilhaften Ausführungsform ist vorgesehen, dass das Erreichen eines vorgegebenen Sollmaßes beim Eindringen des Schaftes in die Bohrung durch einen mechanischen Anschlag erfasst wird, der auf ein vorgegebenenes Sollmaß eingestellt und fixiert wird und der dem Kontaktstück, insbesondere einem beweglichen Halter des Kontaktstückes, zugeordnet ist und beim Eindringen des Schaftes in die Bohrung den Eindringweg durch Anschlagen an diesem Anschlag begrenzt.

Eine weitere vorteilhafte Ausführungsform der Erfindung sieht vor, dass das Werkzeug mit seinem Schaft in eine zum freien Ende der Bohrung der Werkzeugaufnahme koaxiale zentrierende Abstützbohrung einer Abstützung, insbesondere einer solchen der Werkzeugaufnahme selbst, eingebracht wird, wobei sich die Werkzeugaufnahme im nicht erhitzten Zustand befindet, dass der Halter mit seinem Kontaktstück dann auf das Werkzeug aufgesetzt wird, dass hiernach die das Werkzeug gegensinnig zum Eindringen in die Bohrung der Werkzeugaufnahme beaufschlagende Gegenkraft und damit die Einspannung des Werkzeuges zwischen dem Kontaktstück und der Gegenkraft aktiviert wird und hiernach die Erhitzung der Werkzeugaufnahme gestartet wird mit einhergehendem axialem Eindringen des Werkzeuges mit dem Schaft in die Bohrung der Werkzeugaufnahme so weit, bis der Halter am Anschlag anschlägt, und dass hiernach dann die Erhitzung der Werkzeugaufnahme gestoppt und nach Abkühlung die Wirkung der Gegenkraft aufgehoben wird. Die Gegenkraft stellt dabei sicher, dass das Werkzeug nicht etwa unter seiner Gewichtskraft über die vorgegebene Eindringtiefe hinaus tiefer in die Bohrung der Werkzeugaufnahme gelangen kann. Deswegen wird erst nach Abkühlung der Werkzeugaufnahme mit einhergehender Schrumpfung der Bohrung und Klemmung des Werkzeugschaftes die Wirkung der Gegenkraft aufgehoben.

Von Vorteil kann es sein, die Stellung des Kontaktstücks, das auf dem Werkzeug aufsitzt, relativ zum Halter und auf diese Weise die Position des Halters in Bezug auf den Anschlag zu verstellen, vorzugsweise feineinzustellen, bevor die Erhitzung der Werkzeugaufnahme gestartet wird. Zur Erleichterung und zur Erreichung noch größerer Genauigkeit kann am Halter ein optisches Meßsystem gehalten sein mit Beleuchtungseinrichtung, Aufnahmeeinrichtung und Bildschirm mit vergrößerter Wiedergabe des Aufnahmebereichs. Hierbei kann durch Verstellung des auf dem Werkzeug aufsitzenden Kontaktstücks relativ zum Halter mit Meßsystem eine Einstellung des optischen Meßsystems mit optischer Antastung einer vorgegebenen Bezugsgeometrie des Werkzeuges erfolgen, z. B. mit Antastung der Spitze eines Bohrers, der höchsten Schneide eines Fräsers, der ersten oder zweiten Stufe eines Stufenwerkzeuges oder durch Antastung einer anderen maßbestimmenden Kante des Werkzeuges. Hierbei wird durch Verstellung des Kontaktstückes, das sich auf der Spitze des Werkzeuges abstützt, der Halter und damit das optische System verstellt relativ zum Werkzeug und so, dass der Halter dann beim späteren Eindringen des Schaftes in die Bohrung der Werkzeugaufnahme durch Anschlagen an dem auf das vorgegebene Sollmaß eingestellten Anschlag die Eindringtiefe des Werkzeuges von oben her begrenzt, während ein etwaiges weiteres tieferes Eindringen des Werkzeuges in die Bohrung durch die gegensinnig dazu wirkende Gegenkraft verhindert wird.

Von Vorteil kann es sein, wenn der Anschlag in Bezug auf eine Maßverkörperung, z. B. einen Maßstab, zur Einstellung des Sollmaßes verstellt wird, insbesondere feinverstellt wird und sodann in seiner eingestellten Position in Bezug auf die Maßverkörperung fixiert wird, z. B. geklemmt wird und in dieser Position dann einen mechanischen Anschlag für den Halter des Kontaktstücks, ggf. auch noch des daran sitzenden optischen Meßsystems, bildet.

Von Vorteil kann es ferner sein, wenn beim axialen Eindringen des Schaftes des Werkzeuges in die Bohrung der Werkzeugaufnahme dann, wenn das Sollmaß erreicht ist, insbesondere beim Anschlagen des Halters am Anschlag, ein elektrischer Schaltkontakt geschlossen wird, mittels dessen die Zufuhr insbesondere elektrischer Energie für die Erhitzung der Werkzeugaufnahme unterbrochen wird. Dieser Schaltkontakt kann in besonders einfacher Weise Bestandteil des Anschlages und/oder des diesen berührenden Halters sein bzw. durch diese selber gebildet sein.

Von besonderem Vorteil kann es sein, wenn zumindest der Bereich des Kontaktstücks, der in Kontakt mit dem Werkzeug gelangt, z. B. dessen Spitze, Schneide od. dgl., aus einem solchen Material gebildet ist, das im Vergleich zum Material des Werkzeuges nachgiebiger, z. B. weicher ist, wobei als derartiges Material z. B. Gummi, Kunststoff od. dgl. federähnlich elastisches Material in Frage kommt oder statt dessen auch ein mittels Feder abgefederter Teil des Kontaktstücks. Dadurch ist sichergestellt, dass beim Aufsetzen des Kontaktstückes auf das freie Ende des Werkzeuges, z. B. die Werkzeugspitze, selbst empfindliche Werkzeuge in diesem Bereich nicht beschädigt oder in sonstiger Weise nachteilig beeinflußt werden.

Die gegensinnig zum Eindringen des Werkzeugschaftes in die Bohrung wirkende Gegenkraft kann je nach Gestaltung des Werkzeuges und/oder der Werkzeugaufnahme auf mechanische Weise, z. B. mittels eines Anschlages, eines Greifers od. dgl., erzeugt und auf das Werkzeug übertragen werden. Bei solchen Werkzeugen, die mit ihrem ganzen Schaft eingespannt werden, oder die hinsichtlich der Geometrie anders gestaltet sind und bei denen es deswegen nicht möglich ist, diese mechanisch zu greifen oder in sonstiger mechanischer Weise mit der Gegenkraft zu beaufschlagen, ist es von besonderem Vorteil, wenn die Gegenkraft mittels eines Druckgaspolsters erzeugt wird, das innerhalb der Bohrung der Werkzeugaufnahme aufrechterhalten wird. Dabei ist es vorteilhaft, dieses Druckgaspolster solange aufrecht zu erhalten, bis nach dem Beenden der Erhitzung der Werkzeugaufnahme diese während einer darauffolgenden Haltezeit abgekühlt ist. Für die Erzeugung des Druckgaspolsters im Inneren der Bohrung der Werkzeugaufnahme kann es von Vorteil sein, wenn in die Bohrung der Werkzeugaufnahme, z. B. durch dort vorhandene Kühlmittelkanäle, ein Druckgas, z. B. Druckluft, eingeführt wird. Damit auch solche Werkzeuge in gleicher Weise mit der Gegenkraft beaufschlagt werden können, die innere Kühlmittelkanäle enthalten, kann es von Vorteil sein, wenn für die Erzeugung des Druckgaspolsters in diesem Fall eine Regelung des Volumenstromes des Druckgases, z. B.über eine Drosselung, erfolgt bis der notwendige Gasdruck erreicht ist. Von Vorteil kann es ferner sein, wenn die Größe der Gegenkraft, insbesondere des Druckgaspolsters, so eingestellt ist, dass diese gleich oder größer ist als die entgegenwirkende Gewichtskraft eines in der Bohrung der Werkzeugaufnahme aufnehmbaren Werkzeuges; denn bei z. B. vertikaler Anordnung der Werkzeugaufnahme mit Bohrung und vertikal eindringendem Schaft des Werkzeuges in die Bohrung wirkt in vertikaler Richtung die Gewichtskraft des Werkzeuges. Vor dem Erreichen des vorgegebenen Sollmaßes und vor dem Erreichen eines entsprechend eingestellten Anschlages, an dem bei dieser vertikalen Eindringbewegung der Halter mit dem Kontaktstück anschlagen kann, wirkt zusätzlich zur Gewichtskraft des Werkzeuges auch noch die Gewichtskraft des Halters mit Teilen daran. Die Summe dieser Gewichtskräfte kann, muss aber nicht unbedingt, von der Gegenkraft aufgenommen werden, da nach Erreichen des Sollmaßes und damit Anschlagen des Halters am Anschlag die Gewichtskraft des Anschlages mit Kontaktstück und sonstigen am Halter sitzenden Teilen dann vom Anschlag aufgenommen wird und durch die Gegenkraft somit nur die Gewichtskraft des Werkzeuges aufzunehmen ist.

Ferner kann es vorteilhaft sein, die Größe der Gegenkraft in Anpassung an Werkzeuge mit unterschiedlicher Geometrie zu variieren. Z. B. kann zur Anpassung das Gewicht des jeweils eingebrachten Werkzeuges durch Wiegen mittels einer Wägeeinrichtung ermittelt werden und die Größe der Gegenkraft in Anpassung daran jeweils ermittelt und vorgegeben werden. Dies kann man z. B. in der Weise verwirklichen, dass man vor dem Einsetzen des Werkzeuges in die Abstützbohrung der Werkzeugaufnahme zunächst das Gewicht der Werkzeugaufnahme und des Trägers dieser wiegt und in einem anschließenden Wägevorgang bei nunmehr in die Abstützbohrung der Werkzeugaufnahme eingesetztem Werkzeug das Gewicht der vorgenannten Teile zusammen mit dem Werkzeug durch Wiegen ermittelt und durch Differenzbildung damit das reine Werkzeuggewicht erhält. Eine derartige Anpassung der Größe der Gegenkraft an unterschiedliche Werkzeuggeometrien ist dann von Vorteil, wenn eine vorgegebene Größe des Druckes für das Druckgaspolster nicht für alle Werkzeuggeometrien ausreichend ist.

Von Vorteil kann es ferner sein, wenn der Halter mit dem Kontaktstück durch Gewichtskraft und/oder von Hand und/oder mittels getrieblicher Mittel und/oder mittels eines Stellantriebes od. dgl. bewegt wird, wobei eine nicht durch Gewichtskraft erfolgende Bewegung vor allem dann von Vorteil ist, wenn das Eindringen des Schaftes des Werkzeuges in die Bohrung der Werkzeugaufnahme nicht in vertikaler Richtung geschieht sondern in irgendeiner dazu quer verlaufenden Richtung, z. B. bei horizontaler Anordnung und horizontalem Eindringen des Werkzeuges. Von Vorteil kann es ferner sein, wenn die Bewegung des Halters derart erfolgt, dass das Kontaktstück eine Linearbewegung etwa koaxial oder parallel zur Längsachse des Werkzeuges und/oder quer dazu vollführt.

Eine weitere vorteilhafte Ausgestaltung des Verfahrens gemäß der Erfindung sieht vor, dass der Halter und der einstellbare Anschlag miteinander so gekuppelt sind oder kuppelbar sind, dass durch Bewegung des Halters z. B. in beiden Bewegungsrichtungen die Einstellung des Anschlages vorgenommen werden kann. Dies hat den Vorteil, dass der Anschlag selbst keinen eigenen Stellantrieb od. dgl. zur Verstellung benötigt sondern dazu auf die auf den Halter wirkende Gewichtskraft od. dgl. getriebliche Mittel bzw. Stellantrieb oder Handbetätigung zurückgegriffen wird. Z. B. kann eine Kupplung zwischen dem Halter und dem Anschlag mittels magnetischer Kraft in einer Richtung und dergestalt erfolgen, dass der Anschlag durch Bewegung des Halters in einer Richtung mittels magnetischer Kraft mitgenommen wird und bei Bewegung des Halters in dazu gegensinniger Richtung z. B. mittels formschlüssigem Kontakt, z. B. durch Anschlagen, mitgenommen wird.

Eine andere eigenständige Erfindungslösung ergibt sich aus Anspruch 20 und dem Unteranspruch 21. Dieses Einstellverfahren ist insbesondere dann von Vorteil, wenn es nicht möglich ist, das untere Ende des Werkzeuges mit einer Gegenkraft, z.B. einem Druckgaspolster, zu beaufschlagen. Bei diesem Verfahren wird zunächst der Halter mit dem Kontaktstück als oberer Anschlag soweit heruntergefahren, bis das Kontaktstück die an einem Ende des Werkzeuges befindliche Werkzeugschneide kontaktiert. Sodann wird dieses Kontaktstück, das z.B. aus einem Mikrometer besteht, eingestellt, damit die Schneide des Werkzeuges nach dem Fadenkreuz des optischen Messsystems, z.B. des Profilprojektors, ausgerichtet ist. Dieses optische Messsystem, insbesondere der Profilprojektor, misst dabei die Höhe der Schneide des Werkzeuges. Im Anschluss daran wird gegensinnig dazu von unten her das Messglied mit seiner Kontaktfläche gegen die zugewandte untere Stirnseite des Werkzeuges bewegt und letztere angetastet. Dieses untere Messglied wird auf diese Weise eingestellt und diese Funktion dabei mittels Software gesteuert. Ausgehend von der Position des optischen Messsystems, z.B. des Profilprojektors, errechnet die Software den benötigten Stellweg für das untere Messglied, um das Werkzeug auf Sollmaß einzustellen. Hiernach wird das untere Messglied auf diese Sollposition eingestellt, wobei die Endfläche des Messgliedes die Soll-Anschlagposition für die zugewandte untere Stirnseite des Werkzeuges einnimmt. Sodann wird das Werkzeug eingeschrumpft, wobei das Werkzeug in der Bohrung der Werkzeugaufnahme sich nach unten bewegt, bis dessen Stirnseite an der zugewandten Stirnfläche des unteren Messgliedes anschlägt und damit die axiale Sollposition erreicht ist. Da das Werkzeug bei diesen Einstellvorgängen seine axiale relative Drehposition beibehält und die dem unteren Ende des Werkzeuges zugewandte Stirnfläche nicht verlagert wird, führt die Verstellung des unteren Messgliedes bis hin zur Sollanschlagstellung nicht zu einer etwaigen Verfälschung.

Weitere Einzelheiten und Vorteile der Erfindung ergeben sich aus der nachfolgenden Beschreibung.

Das Verfahren gemäß der Erfindung einschließlich die zur Durchführung erforderlichen Vorrichtungsteile sind nachfolgend anhand von in den Zeichnungen gezeigten Ausführungsbeispielen näher erläutert. Es zeigen:
- Fig. 1: eine schematische Seitenansicht eines ersten Ausführungsbeispiels mit schematischer Darstellung der einzelnen Vorrichtungsteile,
- Fig. 2: eine teilweise geschnittene schematische Seitenansicht einer Vorrichtung gemäß einem ersten Ausführungsbeispiel zur Durchführung des Verfahrens,
- Fig. 3: eine teilweise geschnittene schematische Seitenansicht einer Vorrichtung gemäß einem zweiten Ausführungsbeispiel zur Durchführung des Verfahrens,
- Fig. 4: eine schematische, teilweise geschnittene Seitenansicht der einzelnen Vorrichtungsteile in verschiedenen Stufen beim Durchlaufen einiger Schritte des Verfahrens gemäß der Erfindung,
- Fig. 5: eine schematische, teilweise geschnittene Seitenansicht einzelner Vorrichtungsteile in verschiedenen Stufen beim Durchlaufen einiger Schritte des Verfahrens gemäß einem zweiten Ausführungsbeispiel.

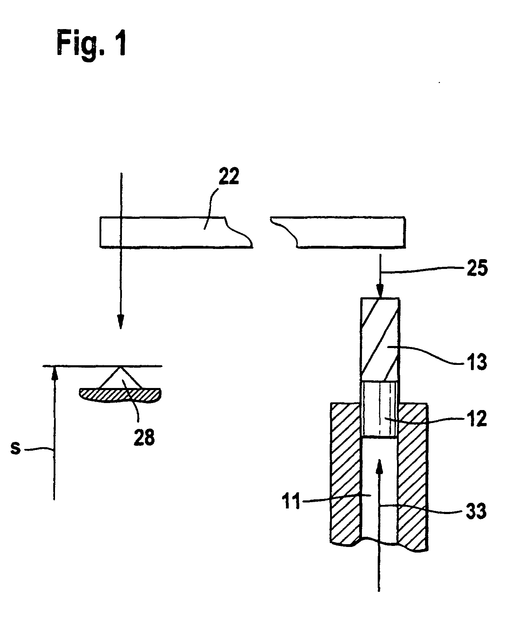

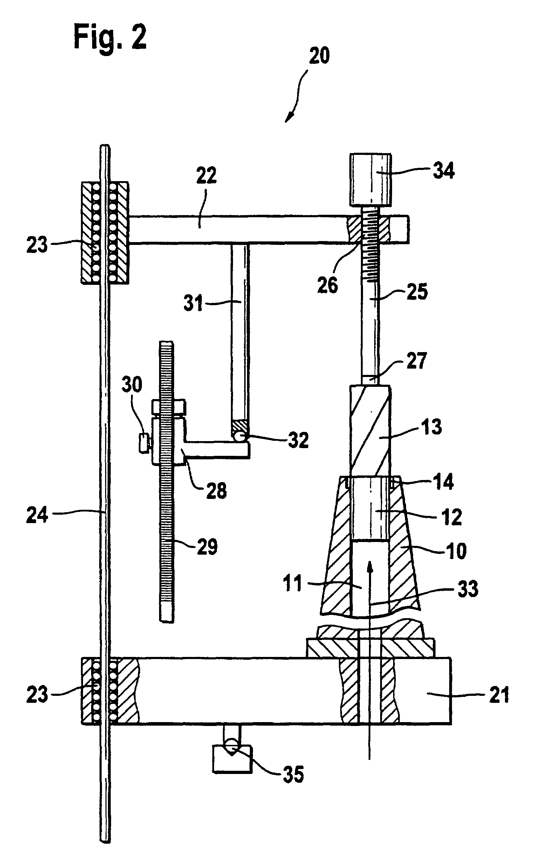

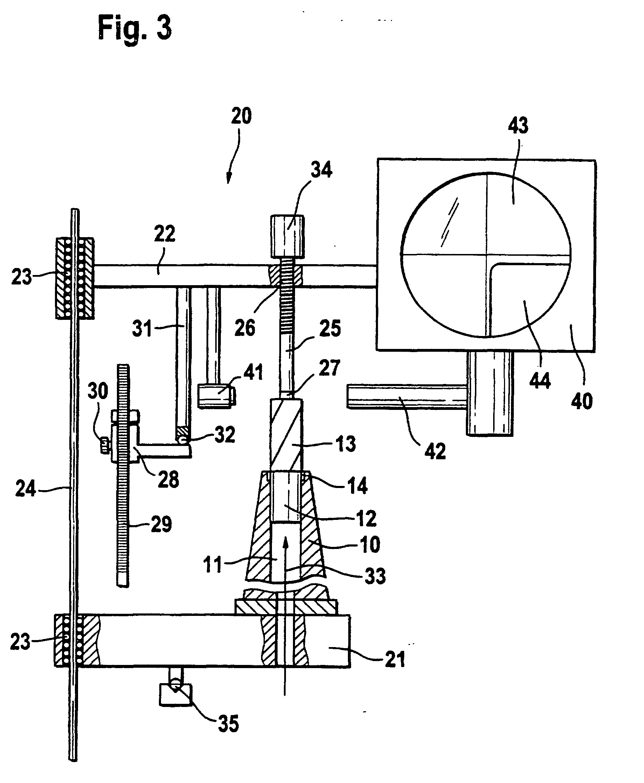

In den Zeichnungen ist schematisch eine Werkzeugaufnahme 10 mit darin enthaltener Bohrung 11 für die Aufnahme eines zylindrischen Schaftes 12 eines Werkzeuges 13 darstellt. Bei der Werkzeugaufnahme 10 kann es sich um ein beliebiges Bauteil handeln, z. B. einen Spindelabschnitt, einen Teil eines Futters, eines Adapters od. dgl.. Beim Werkzeug 13 handelt es sich ebenfalls um ein beliebiges Werkzeug, z. B. einen Bohrer, Gewindebohrer, Fräser, ein Stufenwerkzeug od. dgl.. Die Bohrung 11 in der Werkzeugaufnahme 10 kann nach unten hin offen sein und für die koaxiale Abstützung des Werkzeuges 13 vor dem Einschrumpfen eine zur Bohrung 11 koaxiale zentrierende Abstützbohrung 14 am freien Ende aufweisen, die hinsichtlich des Durchmessers geringfügig größer als die Bohrung 11 bemessen ist, so dass im kalten Zustand der Werkzeugaufnahme das Werkzeug 13 mit dem Ende des Schaftes 12 in dieser Abstützbohrung 14 koaxial aufgenommen und zentriert gehalten und koaxial gegen Verschiebung nach unten abgestützt wird. Zur Durchführung des Verfahrens zum kraftschlüssigen Einspannen des Werkzeuges 13 mit seinem Schaft 12 in der Bohrung 11 der Werkzeugaufnahme 10 durch Schrumpfen mittels Erhitzung und Abkühlung dieser ist eine Vorrichtung 20 vorgesehen, die einen Träger 21 zur Aufnahme der Werkzeugaufnahme 10 und in Abstand oberhalb des Trägers 21 einen Halter 22 aufweist, die beide z.B. jeweils mittels einer Kugelhülse 23 an einer vertikalen Führung 24, z. B. Führungsstange, gehalten und verschiebbar und bedarfsweise einstellbar geführt sind. Der Halter 22 ist Träger eines nur schematisch angedeuteten Kontaktstückes 25, das beim in Fig. 2 gezeigten Ausführungsbeispiel entweder unverstellbar oder mittels eines Gewindes 26 relativ zum Halter 22 verstellbar und feineinstellbar ist. Das Kontaktstück 25 ist relativ zur Werkzeugaufnahme 10 zumindest vertikal beweglich und kann von oben her am freien Ende des Werkzeuges 13, z. B. einer dortigen Spitze, Schneide od. dgl., zur Anlage gebracht werden, wie dies in Fig. 1 bis 3 veranschaulicht ist. Zumindest der Bereich des Kontaktstücks 25, der in Kontakt mit dem Werkzeug 13, z. B. dessen Spitze, Schneide od. dgl., gelangt und in Fig. 2 und 3 als vom restlichen Teil des Kontaktstückes 25 abgetrennter Teil 27 schematisch gezeigt ist, besteht mit Vorteil aus einem Material, das im Vergleich zum Material des Werkzeuges 13 nachgiebiger, z. B. weicher, ist, z. B. aus Gummi, Kunststoff od. dgl. federähnlich elastischem Material. Statt dessen kann der Teil 27 auch aus einem mittels nicht gezeigter Feder in Bezug auf den restlichen Teil des Kontaktstückes 25 abgefederten Teil gebildet sein. Die Vorrichtung 20 weist ferner einen Anschlag 28 auf, der in Fig. 2 und 3 etwas detaillierter dargestellt ist, wo der Anschlag 28 in Bezug auf eine angedeutete Maßverkörperung 29, z. B. einen Maßstab, für die Einstellung eines Sollmaßes s (Fig. 1) verstellbar ist, insbesondere feinverstellbar ist. Der Anschlag 28 kann in der jeweils eingestellten Position relativ zur Maßverkörperung 29 fixiert werden, z. B. mittels einer nur schematisch angedeuteten Klemmschraube 30 geklemmt werden. Zwischen dem Anschlag 28 einerseits und dem im Laufe der Einstellung daran von oben anschlagenden Halter 22 andererseits kann ein nicht besonders dargestellter elektrischer Schaltkontakt geschlossen werden, mittels dessen die Zufuhr insbesondere elektrischer Energie unterbrochen wird, die für die Erhitzung der Werkzeugaufnahme 10 zuvor freigegeben wurde. Der Schaltkontakt kann durch entsprechende Oberflächen des Anschlages 28 und/oder des Halters 22 unmittelbar gebildet sein. In Fig. 2 und 3 ragt vom Halter 22 eine Verlängerung 31 nach unten, die den mechanischen Anschlag des Halters 22 am Anschlag 28 bewirkt und am Ende z. B. eine Kugel 32 für die Kontaktgabe lagert. In Fig. 1 bis 3 ist lediglich durch einen Pfeil 33 angedeutet, dass beim Einstellen und Einschrumpfen des Werkzeuges 13 dieses mit einer Gegenkraft, die in Fig. 1 bis 3 nach oben wirksam ist, beaufschlagt wird, die gegensinnig zum Eindringen des Werkzeuges 13 von oben her in die Bohrung 11 wirkt, wobei das Werkzeug 13 zwischen dem Kontaktstück 25 einerseits und der Gegenkraft gemäß Pfeil 33 andererseits eingespannt ist.

Beim Ausführungsbeispiel in Fig. 2 erfolgt die Antastung des oberen freien Endes des Werkzeuges 13 mittels des Kontaktstückes 25 durch Aufsetzen dieses, insbesondere des Teils 27, und Antasten, wobei eine Feineinstellung des Kontaktstückes 25 relativ zum Halter 22 durch Anfassen an der Handhabe 34 und Drehung im Gewinde 26 möglich ist.

Beim zweiten Ausführungsbeispiel in Fig. 3 ist die Vorrichtung mit einem optischen Meßsystem 40 versehen, das am Halter 22 gehalten ist und eine schematisch angedeutete Beleuchtungseinrichtung 41, gegenüberliegende Aufnahmeeinrichtung 42 und einen Bildschirm 43 mit vergrößerter Wiedergabe des Aufnahmebereichs aufweist. Das optische Meßsystem 40 sitzt fest am Halter 22. Bei Einstellung des am Werkzeug 13 abgestützten Kontaktstücks 25 wird die Vertikalposition des Halters 22 verstellt. Durch diese Relatiwerstellung zwischen dem Kontaktstück 25 und dem Halter 22 mit Meßsystem 40 erfolgt eine Einstellung des optischen Systems 40 mit optischer Antastung einer vorgegebenen Bezugsgeometrie des Werkzeuges 13, z. B. der Spitze eines Bohrers, der höchsten Schneide eines Fräsers, der ersten oder zweiten Stufe eines Stufenwerkzeuges oder dergleichen maßbestimmender Kante des Werkzeuges 13.

Bei allen Ausführungsbeispielen ist der Halter 22 mit dem Kontaktstück 25 z. B. durch Gewichtskraft und/oder von Hand und/oder mittels getrieblicher Mittel und/oder mittels eines Stellantriebes od. dgl. bewegbar, wobei diese getrieblichen Mittel bzw. ein solcher Stellantrieb hier nicht besonders gezeigt sind, die z. B. aus einem Stellmotor bestehen können. Beim Beispiel in Fig. 3 sieht man auf dem Bildschirm 43 die vergrößerte Ansicht eines oberen Teils 44 der Geometrie des Werkzeuges 13.

Der Halter 22 ist mit dem einstellbaren Anschlag 28 gekuppelt oder kuppelbar, so dass durch Verstellbewegung des Halters 22 der Anschlag 28 mitgenommen und entsprechend eingestellt werden kann. Z. B. wird der Anschlag 28 durch magnetische Kraft bei der Bewegung des Halters 22 nach oben von der Verlängerung 31 des Halters 22 mit nach oben bewegt, bis das Sollmaß s eingestellt ist, woraufhin der Anschlag 28 mittels Klemmung, z. B. der Klemmschraube 30, in dieser eingestellten Position fixiert wird. Eine etwaige gegensinnige Verstellbewegung des Anschlages 28 erfolgt z. B. durch formschlüssigen Kontakt, z. B. durch Anschlagen des Halters 22 unmittelbar oder mittels der Verlängerung 31, in der entgegengesetzten Richtung.

Beim Ausführungsbeispiel in Fig. 2 und 3 ist die Vorrichtung 20 ferner mit einer nur schematisch angedeuteten Wägeeinrichtung 35 versehen, die den Vorteil hat, dass diese eine Variierung der Größe der Gegenkraft gemäß Pfeil 33 in Anpassung an Werkzeuge 13 mit unterschiedlicher Geometrie ermöglicht. Die Wägeeinrichtung 35 macht es möglich, zur Anpassung das Gewicht des jeweils eingebrachten Werkzeuges 13 durch Wiegen zu ermitteln und in Anpassung an das Wiegeergebnis die Größe der Gegenkraft 33 vorzugeben. Hierbei kann zunächst in einem ersten Vorgang vor dem Einsetzen des Werkzeuges 13 in die Abstützbohrung 14 der Werkzeugaufnahme 10 das Gewicht des Trägers 21 und der Werkzeugaufnahme 10 ermittelt werden. Hiernach wird das Werkzeug 13 mit dem Ende des Schaftes 12 von oben her in die Werkzeugaufnahme 10 eingesetzt, wobei es mit dem Ende des Schaftes 12 in der Abstützbohrung 14 so aufgenommen wird, dass eine koaxiale Halterung und Zentrierung und eine axiale Abstützung von unten her erfolgt. Sodann wird in einem zweiten Wiegevorgang mittels der Wägeeinrichtung 35 das Gewicht des Träges 21, der Werkzeugaufnahme 10 und des Werkzeuges 13 ermittelt. Aus der Differenzbildung läßt sich dann das Gewicht des Werkzeuges 13 errechnen.

Die nur durch Pfeil 33 repräsentierte Gegenkraft kann mittels eines Druckgaspolsters erzeugt werden, das innerhalb der Bohrung 11 der Werkzeugaufnahme 10 aufrechterhalten wird, und zwar beim Einstellen und Einschrumpfen solange, bis nach dem Beenden der Erhitzung der Werkzeugaufnahme 10 letztere während einer darauf folgenden Haltezeit abgekühlt ist. Für die Erzeugung dieses Druckgaspolsters kann in die Bohrung 11 der Werkzeugaufnahme 10 z. B. durch einen Kanal von unten her oder über andere vorhandene, nicht gezeigte Kühlmittelkanäle, ein Druckgas, z. B. Druckluft, eingeführt werden. Die Größe der Gegenkraft, insbesondere des Druckgaspolsters, wird dabei mit Vorteil so eingestellt, dass sie größer ist als die entgegenwirkende Gewichtskraft eines in der Bohrung 11 der Werkzeugaufnahme 10 aufnehmbaren Werkzeuges 13. Dann bedarf es normalerweise der Wägeeinrichtung 35 und der beschriebenen Wiegevorgänge nicht, die nur dann zum Einsatz kommen, wenn die Größe der Gegenkraft gemäß Pfeil 33 in Anpassung an Werkzeuge 13 mit unterschiedlicher Geometrie variiert wird.

Für solche hier nicht gezeigten Werkzeuge 13, die innere Kühlmittelkanäle enthalten, über die beim Aufbringen des Druckgaspolsters Druckgas entweichen kann, erfolgt für die Erzeugung des Druckgaspolsters eine Regelung des Volumenstromes des Druckgases, z. B. über eine Drosselung, bis der notwendige Gasdruck erreicht ist. Normalerweise wird die Größe der Gegenkraft gemäß Pfeil 33, insbesondere des Druckgaspolsters, so eingestellt, dass sie größer ist als die entgegenwirkende Gewichtskraft eines in der Bohrung 11 der Werkzeugaufnahme 10 aufnehmbaren Werkzeuges 13, so dass es dann der Wägeeinrichtung 35 nicht bedarf.

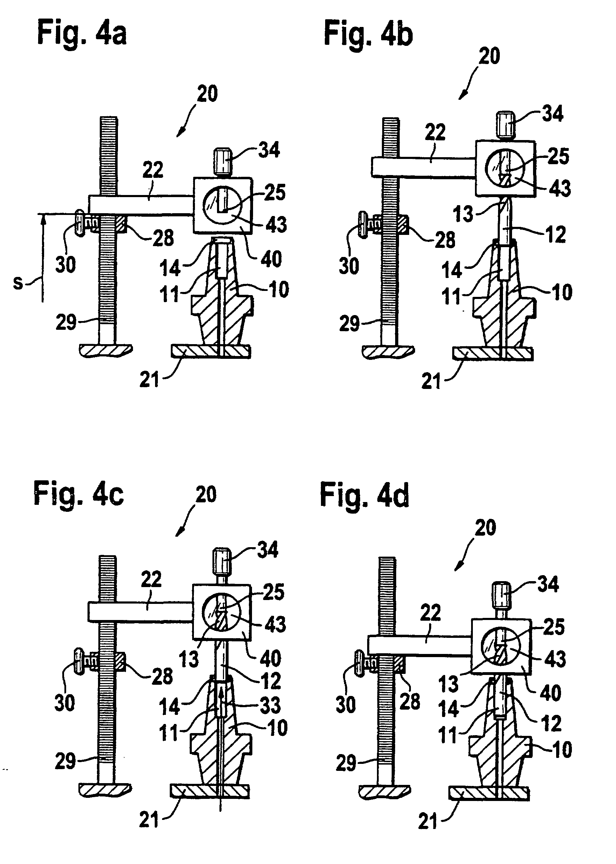

In Fig. 4 sind vereinfacht in Form einer Ablaufskizze einzelne Stufen beim Durchlaufen der einzelnen Verfahrensschritte angedeutet. Zu Beginn befindet sich die Vorrichtung 20 mit den Komponenten in dem Zustand a. Zuvor ist die Werkzeugaufnahme 10 eingebracht worden, z. B. auf den Träger 21 aufgebracht worden, und hiernach der Anschlag 28 auf das Sollmaß s eingestellt und in der eingestellten Stellung fixiert worden, z. B. durch Klemmung mittels der Klemmschraube 30. Zu dieser Einstellung ist der Anschlag 28 durch Magnetverbindung mit dem Halter 22 und Bewegung dieses z. B. mittels eines darauf einwirkenden, nicht gezeigten Stellantriebes, z. B. Motors, in diese Position nach oben bewegt worden.

Anschließend daran wird das Werkzeug 13 von oben her in die Werkzeugaufnahme 10 eingebracht, wobei das Werkzeug 13 mit dem unteren Ende seines Schaftes 12 in der Abstützbohrung 14 koaxial zentriert und axial abgestützt wird. Statt der Abstützbohrung 14 kann die Vorrichtung 20 auch eine z. B. oberhalb der Werkzeugaufnahme 10 befindliche Abstützung aufweisen, die ihrerseits eine entsprechende Abstützbohrung, die koaxial zur Bohrung 11 verläuft, aufweist oder die eine sonstige andersartige Halterung des Werkzeuges 13 derart bewirkt, dass dieses koaxial zur Bohrung 11 ausgerichtet ist und zunächst gegen axiales Herabbewegen abgestützt ist. Nach dem Aufsetzen des Werkzeuges 13 und somit bei koaxial zur Werkzeugaufnahme 10 abgestütztem Werkzeug 13 wird zur Positionierung des Werkzeuges 13 an dessen freiem Ende das bewegliche Kontaktstück 25 zur Anlage gebracht, wie dies die zweite Darstellung b in Fig. 4 zeigt. Nicht dargestellt ist, dass vorher z. B. die der induktiven Erwärmung der Werkzeugaufnahme 10 dienende Induktionsspule herunterbewegt und auf die Werkzeugaufnahme 10 aufgefahren wurde. Nach dem Aufsetzen des Kontaktstückes 25 auf dem freien Ende des Werkzeuges 13 kann bei Vorhandensein des optischen Meßsystems 40 gemäß Fig. 3 und 4 die optische Antastung des Werkzeuges 13, insbesondere z. B. der Spitze oder Schneide dieses, erfolgen. Sodann wird die das Werkzeug 13 gegensinnig zum Eindringen in die Bohrung 11 beaufschlagende Gegenkraft gemäß Pfeil 33 aktiviert. Diesen Zustand zeigen Fig. 1 bis 3 und die Abbildung c in Fig. 4. Hierbei ist das Werkzeug 13 vertikal axial eingespannt zwischen dem von oben her aufsitzenden Kontaktstück 25 einerseits und der gegensinnig von unten her wirkenden Gegenkraft gemäß Pfeil 33 andererseits. Im Anschluss an die Aktivierung dieser Gegenkraft gemäß Pfeil 33 ist durch Betätigung des Kontaktstückes 25 noch bedarfsweise eine Feineinstellung vorzunehmen, bei der das Kontaktstück 25 relativ zum Halter 22 mit Meßsystem 40 verstellt wird. Da das Kontaktstück 25 am Werkzeug 13 abgestützt ist, bedeutet dies eine Verstellung des Halters 22 mitsamt dem Meßsystem 40 relativ zum Werkzeug 13, so dass eine Einstellung des optischen Meßsystems 40 mit optischer Antastung einer vorgegebenen Bezugsgeometrie des Werkzeuges 13, z. B. der Spitze eines Bohrers, der höchsten Schneide eines Fräsers, der ersten oder zweiten Stufe eines Stufenwerkzeuges oder dergleichen maßbestimmender Kante des Werkzeuges 13 erfolgt. Dies bedeutet beim Bild c gemäß Fig. 4 z. B. eine Überdeckung einer Werkzeugkante mit dem Fadenkreuz auf dem Bildschirm 43. Nach dieser Feineinstellung wird die Erhitzung der Werkzeugaufnahme 10 durch Freigabe der elektrischen Energie für die nicht gezeigte Induktionsspule gestartet. Die dadurch eingeleitete Erwärmung der Werkzeugaufnahme 10 hat eine Vergrößerung der Bohrung 11 zur Folge, so dass bei der Vertikalanordnung das Werkzeug 13 in die Bohrung 11 von oben her eindringen und sich nach unten bewegen kann. Hierbei wirken die Gewichtskräfte des Halters 22 mit allen daran sitzenden Teilen ebenfalls auf das Werkzeug 13, wobei auch die Gewichtskraft des Werkzeuges 13 wirksam ist. Dem wirkt die Gegenkraft 33 entgegen. In der kurzen Erhitzungsphase von 5 - 10 Sekunden gelangt somit der Schaft 12 des Werkzeuges 13 tiefer in die Bohrung 11 hinein bis das vorgegebene Sollmaß s erreicht ist z. B. durch Anschlagen des Halters 22 am Anschlag 28. Ein weiteres Hindurchrutschen des Schafts 12 in der Bohrung 11 wird durch die nach wie vor wirksame Gegenkraft 33 verhindert. Nach dem Anschlagen am Anschlag 28 und somit Erreichen des Sollmaßes wird die Erhitzung gestoppt, z. B. mittels eines elektrischen Schaltkontaktes die Zufuhr elektrischer Energie zur Induktionsspule unterbrochen. Nach einer gewissen Haltezeit, die zur Abkühlung der Werkzeugaufnahme 10 soweit, dass die Bohrung 11 geschrumpft und der Schaft 12 kraftschlüssig gespannt ist, ausreicht, wird die Gegenkraft gemäß Pfeil 33 aufgehoben. Hiemach kann der Halter 22 mit allen daran befindlichen Bauteilen gegensinnig nach oben bewegt werden und ferner auch die nicht dargestellte Induktionsspule, woraufhin nun die Werkzeugaufnahme 10 mit darin durch Schrumpfen gespanntem Werkzeug 13 entnommen und einer Kühlstation zur Abkühlung auf Raumtemperatur zugeführt werden kann.

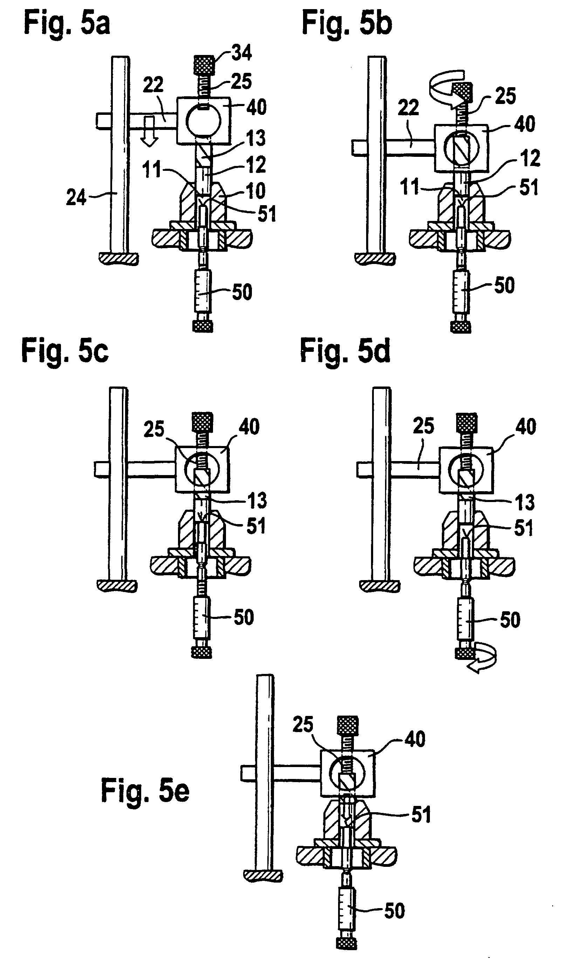

In Fig. 5a bis 5e ist analog Fig. 4a bis 4d ein anderes Ausführungsbeispiel eines Verfahrens gezeigt, bei dem für die Teile, die dem ersten Ausführungsbeispiel entsprechen, gleiche Bezugszeichen verwendet sind, so dass damit zur Vermeidung von Wiederholungen auf die Beschreibung des ersten Ausführungsbeispieles Bezug genommen ist.

Beim zweiten Ausführungsbeispiel wird die Sollposition des in die Werkzeugaufnahme 10 einzuschrumpfenden Werkzeugschaftes 12 und des Werkzeuges 13 durch einen in den Zeichnungen unteren Anschlag in Form eines Messgliedes 50 vorgegeben, das vorzugsweise aus einer Mikrometerschraube besteht, wobei der Anschlag durch die Stirnfläche 51 des verstellbaren Teils des Messgliedes 50 vorgegeben wird.

Wie beim ersten Ausführungsbeispiel, so wird auch in Fig. 5a das Werkzeug 13 mit dem Schaft 12 in die Bohrung 11 der Werkzeugaufnahme 10 eingebracht. Sodann wird das optische Messsystem 40, insbesondere ein Profilprojektor, längs einer Führung 24 soweit nach unten bewegt, bis ein Kontaktstück 25 mit seiner Kontaktfläche auf der Schneide des Werkzeuges 13 anschlägt. Dieses Kontaktstück 25, z.B. eine Mikrometerschraube, wird dann relativ zum Messsystem 40 eingestellt, insbesondere fein eingestellt, damit die Schneide des Werkzeuges 13 nach dem Fadenkreuz des Messsystems 40, insbesondere Profilprojektors, ausgerichtet ist. Das Messsystem 40, insbesondere der Profilprojektor, misst dabei die Höhe der Schneide des Werkzeuges 13. Dieser Zustand ist in Fig. 5b gezeigt. Im Anschluss daran wird in der Zeichnung von unten her ein Messglied 50, z.B. eine Mikrometerschraube, gegensinnig und soweit nach oben zum Werkzeug 13 bewegt, bis die Stirnfläche 51 des Messgliedes 50 an der unteren zugewandten Stirnseite des Werkzeuges 13 anschlägt. Unter Umständen wird das Messglied 50 darüber hinausgehend auch noch zumindest geringfügig weiter nach oben bewegt. Diese Bewegung des Messgliedes 50 wird von einer nicht weiter gezeigten Software eines Rechnersystems gesteuert. Ausgehend von der Position des Kontaktstücks 25 und des optischen Messsystems 40 wird nun für das untere Messglied 50, insbesondere dessen Stirnfläche 51, der erforderliche Stellweg mittels der Software berechnet, der für die Soll-Anschlagposition und dafür erforderlich ist, um beim Einschrumpfen das Werkzeug 13 auf Sollmaß einzustellen. Die errechnete Position für das Messglied 50 wird sodann durch Verstellung des Messgliedes 50 eingestellt. Diesen Zustand zeigt Fig. 5d. Im Anschluss daran wird das Werkzeug 13 in die Werkzeugaufnahme 10 eingeschrumpft. Während der Erwärmung der Werkzeugaufnahme 10 fällt das Werkzeug 13 in der Bohrung 11 herunter, bis es mit seiner Stirnseite an der Stirnfläche 51 des Messgliedes 50 anschlägt und seine Sollposition erreicht hat. Hiemach erfolgt die Abkühlung der Werkzeugaufnahme 10.

## Patentansprüche

1. Verfahren zum kraftschlüssigen Einspannen eines Werkzeuges (13) mit seinem Schaft (12) in einer Bohrung (11) einer Werkzeugaufnahme (10) durch Schrumpfen mittels Erhitzen und Abkühlung dieser, bei dem die axiale Einstecktiefe des Schaftes (12) in die Bohrung (11) durch Einstellung vorgegeben wird,
**dadurch gekennzeichnet,**
**dass** das Werkzeug (13) koaxial zur Werkzeugaufnahme (10) abgestützt wird und zur Positionierung des Werkzeugs (13) an dessen freiem Ende ein bewegliches Kontaktstück (25) zur Anlage gebracht wird, dass das Werkzeug (13) mit einer gegensinnig zu dessen Eindringen in die Bohrung (11) der Werkzeugaufnahme (10) wirkenden, dem aufgesetzten Kontaktstück (25) entgegenwirkenden Gegenkraft (13) beaufschlagt wird, dass sodann die Erhitzung gestartet wird und das Werkzeug (13) während der eingeschalteten Erhitzung zwischen dem Kontaktstück (25) und der gegensinnig dazu wirkenden Gegenkraft (33) gehalten bleibt mit einhergehendem axialen Eindringen des Schaftes (12) in die Bohrung (11) der Werkzeugaufnahme (10) und dass nach Erreichen eines vorgegebenen Sollmaßes (s) beim Eindringen des Schaftes (12) in die Bohrung (11) der Werkzeugaufnahme (10) die Erhitzung gestoppt wird.

2. Verfahren nach Anspruch 1,
**dadurch gekennzeichnet,**
**dass** ein Anschlag (28), der dem Kontaktstück (25), insbesondere einem beweglichen Halter (22) des Kontaktstückes (25), zugeordnet ist, auf ein vorgegebenes Sollmaß eingestellt und fixiert wird.

3. Verfahren nach Anspruch 1 oder 2,
**dadurch gekennzeichnet,**
**dass** das Werkzeug (13) mit seinem Schaft (12) in eine zum freien Ende der Bohrung (11) der Werkzeugaufnahme (10) koaxiale zentrierende Abstützbohrung (14) einer Abstützung, insbesondere der Werkzeugaufnahme (10), eingebracht wird, wobei sich die Werkzeugaufnahme (10) im nicht erhitzten Zustand befindet, dass der Halter (22) mit seinem Kontaktstück (25) auf das Werkzeug (13) aufgesetzt wird, dass die das Werkzeug (13) gegensinnig zum Eindringen in die Bohrung (11) der Werkzeugaufnahme (10) beaufschlagende Gegenkraft (33) und damit die Einspannung des Werkzeugs (13) aktiviert wird und die Erhitzung der Werkzeugaufnahme (10) gestartet wird mit einhergehendem axialen Eindringen des Werkzeuges (13) mit seinem Schaft (12) in die Bohrung (11) der Werkzeugaufnahme (10) soweit, bis der Halter (22) am Anschlag (28) anschlägt und dass hiernach die Erhitzung der Werkzeugaufnahme (10) gestoppt und nach Abkühlung die Wirkung der Gegenkraft (33) aufgehoben wird.

4. Verfahren nach einem der Ansprüche 1 bis 3,
**dadurch gekennzeichnet,**
**dass** die Stellung des auf dem Werkzeug (13) aufsitzenden Kontaktstücks (25) relativ zum Halter (22) und darüber die Position des Halters (22) in Bezug auf den Anschlag (28) verstellt wird, vorzugsweise feineingestellt wird, bevor die Erhitzung der Werkzeugaufnahme (10) gestartet wird.

5. Verfahren nach einem der Ansprüche 1 bis 4,
**dadurch gekennzeichnet,**
**dass** der Anschlag (28) in Bezug auf eine Maßverkörperung (29), z. B. einen Maßstab, zur Einstellung des Sollmaßes (s) verstellt, insbesondere feinverstellt, wird und in seiner eingestellten Position in Bezug auf die Maßverkörperung (29) fixiert wird, z. B. geklemmt wird.

6. Verfahren nach einem der Ansprüche 1 bis 5,
**dadurch gekennzeichnet,**
**dass** beim axialen Eindringen des Schaftes (12) des Werkzeuges (13) in die Bohrung (11) der Werkzeugaufnahme (10) mit Erreichen des Sollmaßes (s), insbesondere beim Anschlagen des Halters (22, 31) am Anschlag (28), ein elektrischer Schaltkontakt geschlossen wird, mittels dessen die Zufuhr insbesondere elektrischer Energie für die Erhitzung der Werkzeugaufnahme (10) unterbrochen wird.

7. Verfahren nach einem der Ansprüche 1 bis 6,
**dadurch gekennzeichnet,**
**dass** zumindest der Bereich (27) des Kontaktstückes (25), der in Kontakt mit dem Werkzeug (13), z. B. dessen Spitze, Schneide od. dgl., gelangt, aus im Vergleich zum Material des Werkzeuges (13) nachgiebigerem, z. B. weicherem, Material gebildet ist, z. B. aus Gummi, Kunststoff od. dgl. federähnlich elastischem Material, oder aus einem mittels Feder abgefederten Teil (27).

8. Verfahren nach einem der Ansprüche 1 bis 27,
**dadurch gekennzeichnet,**
**dass** die Gegenkraft (33) mittels eines Druckgaspolsters erzeugt wird, das innerhalb der Bohrung (11) der Werkzeugaufnahme (10) aufrechterhalten wird.

9. Verfahren nach Anspruch 8,
**dadurch gekennzeichnet,**
**dass** das Druckgaspolster solange aufrechterhalten bleibt, bis nach dem Beenden der Erhitzung der Werkzeugaufnahme (10) diese während einer darauffolgenden Haltezeit abgekühlt ist.

10. Verfahren nach Anspruch 8 oder 9,
**dadurch gekennzeichnet,**
**dass** für die Erzeugung des Druckgaspolsters in die Bohrung (11) der Werkzeugaufnahme (10), z. B. durch dort vorhandene Kühlmittelkanäle, ein Druckgas, z. B. Druckluft, eingeführt wird.

11. Verfahren nach einem der Ansprüche 8 bis 10,
**dadurch gekennzeichnet,**
**dass** für die Erzeugung des Druckgaspolsters für solche Werkzeuge (13), die innere Kühlmittelkanäle enthalten, eine Regelung des Volumenstroms des Druckgases, z. B.über eine Drosselung, erfolgt bis der notwendige Gasdruck erreicht ist.

12. Verfahren nach einem der Ansprüche 1 bis 11,
**dadurch gekennzeichnet,**
**dass** die Größe der Gegenkraft (33), insbesondere des Druckgaspolsters, so eingestellt ist, dass sie größer ist als die entgegenwirkende Gewichtskraft eines in der Bohrung (11) der Werkzeugaufnahme (10) aufnehmbaren Werkzeuges (13).

13. Verfahren nach einem der Ansprüche 1 bis 11,
**dadurch gekennzeichnet,**
**dass** die Größe der Gegenkraft (33) in Anpassung an Werkzeuge (13) mit unterschiedlicher Geometrie variiert wird.

14. Verfahren nach Anspruch 13,
**dadurch gekennzeichnet,**
**dass** zur Anpassung das Gewicht des jeweils eingebrachten Werkzeuges (13) durch Wiegen mittels einer Wägeeinrichtung (35) ermittelt wird und die Größe der Gegenkraft (33) in Anpassung daran vorgegeben wird.

15. Verfahren nach einem der Ansprüche 1 bis 14,
**dadurch gekennzeichnet,**
**dass** der Halter (22) mit Kontaktstück (25) durch Gewichtskraft und/oder von Hand und/oder mittels getrieblicher Mittel und/oder eines Stellantriebes od. dgl. bewegt wird.

16. Verfahren nach Anspruch 15,
**dadurch gekennzeichnet,**
**dass** die Bewegung des Halters (22) derart erfolgt, dass das Kontaktstück (25) eine Linearbewegung etwa koaxial oder parallel zur Längsachse des Werkzeuges (13) und/oder quer dazu vollführt.

17. Verfahren nach Anspruch 15 oder 16,
**dadurch gekennzeichnet,**
**dass** der Halter (22) und der einstellbare Anschlag (28) zu einer Einstellbewegung des Anschlages (28) durch eine Bewegung des Halters (22) in beiden Bewegungsrichtungen miteinander gekuppelt sind oder kuppelbar sind, z. B. mittels magnetischer Kraft in einer Richtung und mittels fomschlüssigem Kontakt, z. B. durch Anschlagen, in der entgegengesetzten Richtung.

18. Verfahren nach einem der Ansprüche 1 bis 17,
**dadurch gekennzeichnet,**
**dass** am Halter (22) ein optisches Meßsystem (40) gehalten ist mit Beleuchtungseinrichtung (41), Aufnahmeeinrichtung (42) und Bildschirm (43) mit vergrößerter Wiedergabe des Aufnahmebereichs.

19. Verfahren nach einem der Ansprüche 1 bis 18,
**dadurch gekennzeichnet,**
**dass** durch Verstellung des auf dem Werkzeug (13) aufsitzenden Kontaktstückes (25) relativ zum Halter (22) mit Meßsystem (40) eine Einstellung des optischen Meßsystems (40) mit optischer Antastung einer vorgegebenen Bezugsgeometrie des Werkzeuges (13), z. B. der Spitze eines Bohrers, der höchsten Schneide eines Fräsers, der ersten oder zweiten Stufe eines Stufenwerkzeuges oder dergleichen maßbestimmender Kante des Werkzeuges (13), erfolgt.

20. Verfahren zum kraftschlüssigen Einspannen eines Werkzeuges (13) mit seinem Schaft (12) in einer Bohrung (11) einer Werkzeugaufnahme (10) durch Schrumpfen mittels Erhitzen und Abkühlung dieser, bei dem vorher die axiale Einstecktiefe des Schaftes (12) in die Bohrung (11) durch Einstellung vorgegeben wird,
**dadurch gekennzeichnet,**
**dass** das Werkzeug (13) mit seinem Schaft (12) in eine zum freien Ende der Bohrung (11) der Werkzeugaufnahme (10) koaxiale zentrierende Abstützbohrung (14) einer Abstützung, insbesondere Werkzeugaufnahme (10), eingebracht wird, wobei sich die Werkzeugaufnahme (10) im nicht erhitzten Zustand befindet, dass ein beweglicher Halter (22) mit einem Kontaktstück (25) auf ein Ende des Werkzeuges (13) aufgesetzt wird und die Stellung des auf dem Werkzeug (13) aufsitzenden Kontaktstücks (25) verstellt wird, vorzugsweise fein eingestellt wird, dass hiernach das gegenüberliegende Ende des Werkzeuges (13) mit einem Messglied (50) gegensinnig zum Eindringen des Werkzeuges (13) in die Bohrung (11) der Werkzeugaufnahme (10) bis zum Kontakt angetastet und diese Stellung des Messgliedes (50) festgehalten wird und dass hiernach die Erhitzung der Werkzeugaufnahme (10) gestartet wird mit einhergehendem axialen Eindringen des Werkzeuges (13) mit seinem Schaft (12) in die Bohrung (11) der Werkzeugaufnahme (10) soweit, bis das Werkzeug (13) mit seinem Ende am Messglied (50) anschlägt, und dass hiernach die Erhitzung der Werkzeugaufnahme (10) gestoppt wird.

21. Verfahren nach Anspruch 20,
**dadurch gekennzeichnet,**
**dass** ausgehend von der Einstellung des Kontaktstücks (25) und des Messgliedes (50) eine Soll-Anschlagsposition für das Messglied (50) ermittelt und eingestellt wird, die der späteren Sollposition des Werkzeuges (13) in der Werkzeugaufnahme (10) entspricht.

## Claims

1. Method for the force-closed clamping of a tool (13) with its shaft (12) in a bore (11) of a tool mount (10) by shrinking by means of heating and cooling the latter, whereby the axial insertion depth of the shaft (12) into the bore (11) is predetermined by adjustment, **characterised in that** the tool (13) is supported coaxially relative to the tool mount (10), and to position the tool (13) a movable contact piece (25) is positioned at its free end, **in that** the tool (13) is pressurised by a counterforce (13) acting in opposite direction to its insertion into the bore (11) of the tool mount (10) and acting against the fitted contact piece (25), **in that** the heating is then commenced and the tool (13) during the heating period is held between the contact piece (25) and the counterforce (33) acting in opposite direction thereto with an associated axial insertion of the shaft (12) into the bore (11) of the tool mount (10), and **in that** after reaching a predetermined desired dimension (s) on entering the shaft (12) into the bore (11) of the tool mount (10) the heating is stopped.

2. Method according to claim 1, **characterised in that** a stop (28), which is allocated to the contact piece (25), in particular a movable holder (22) of the contact piece (25), is adjusted and fixed at a predetermined desired dimension.

3. Method according to claim 1 or 2, **characterised in that** the tool (13) with its shaft (12) is inserted into a support bore (14) of a support, in particular the tool mount (10), which support bore is coaxially centring relative to the free end of the bore (11) of the tool mount (10), whereby the tool mount (10) is in the not heated state, **in that** the holder (22) with its contact piece (25) is fitted onto the tool (13), **in that** the counterforce (33) pressurising the tool (13) in opposite direction for insertion into the bore (11) of the tool mount (10) and thereby the clamping of the tool (13) is activated and the heating of the tool mount (10) is started with the associated axial insertion of the tool (13) with its shaft (12) into the bore (11) of the tool mount (10) until the holder (22) reaches the stop (28), and **in that** after this the heating of the tool mount (10) is stopped and after cooling the effect of the counterforce (33) is removed.

4. Method according to one of claims 1 to 3, **characterised in that** the position of the contact piece (25) sitting on the tool (13) relative to the holder (22) and also the position of the holder (22) in relation to the stop (28) is adjusted, preferably finely adjusted, before the heating of the tool mount (10) is started.

5. Method according to one of claims 1 to 4, **characterised in that** the stop (28) is adjusted, in particular finely adjusted, in relation to a standard gauge (29), e.g. a graduated measure, for setting the desired dimension (s), and is fixed, e.g. clamped, in its set position relative to the standard gauge (29).

6. Method according to one of claims 1 to 5, **characterised in that** on the axial insertion of the shaft (12) of the tool (13) into the bore (11) of the tool mount (10) on reaching the desired dimension (s), in particular when the holder (22, 31) hits the stop (28), an electric switching contact is closed, by means of which the supply in particular of electrical power for heating the tool mount (10) is interrupted.

7. Method according to one of claims 1 to 6, **characterised in that** at least the area (27) of the contact piece (25) which is in contact with the tool (13), e.g. its tip, blade or the like, is made from a material that is more flexible, e.g. softer, than the material of the tool (13), e.g. rubber, plastic or similar spring-like elastic material or a part (27) mounted by a spring.

8. Method according to one of claims 1 to 27, **characterised in that** the counterforce (33) is produced by means of a cushion of compressed gas, which is held upright inside the bore (11) of the tool mount (10).

9. Method according to claim 8, **characterised in that** the cushion of compressed gas remains upright until after the tool mount (10) has stopped being heated, the latter is cooled during a subsequent holding period.

10. Method according to claim 8 or 9, **characterised in that** to produce the cushion of compressed gas compressed gas, e.g. compressed air, is introduced into the bore (11) of the tool mount (10), e.g. via coolant channels provided therein.

11. Method according to one of claims 8 to 10, **characterised in that** to produce the cushion of compressed gas for such tools (13) which contain inner coolant channels the volumetric flow rate of the compressed gas is controlled, e.g. by a restriction, until the required gas pressure is achieved.

12. Method according to one of claims 1 to 11, **characterised in that** the magnitude of the counterforce (33), in particular of the cushion of compressed gas, is adjusted so that it is greater than the opposing weight of a tool (13) mountable in the bore (11) of the tool mount (10).

13. Method according to one of claims 1 to 11, **characterised in that** the magnitude of the counterforce (33) is varied to adjust to tools (13) with different dimensions.

14. Method according to claim 13, **characterised in that** for the adjustment the weight of the respectively inserted tool (13) is determined using a weighing device (35) and the magnitude of the counterforce (33) is then determined in accordance therewith.

15. Method according to one of claims 1 to 14, **characterised in that** the holder (22) with contact piece (25) is moved by weight and/or by hand and/or by gearing means and/or an actuating mechanism or the like.

16. Method according to claim 15, **characterised in that** the movement of the holder (22) is performed in such a way that the contact piece (25) performs a linear movement roughly coaxial or parallel to the longitudinal axis of the tool (13) and/or perpendicular thereto.

17. Method according to claim 15 or 16, **characterised in that** the holder (22) and the adjustable stop (28) are coupled together or can be coupled for an adjustment movement of the stop (28) by a movement of the holder (22) in both directions of movement, e.g. by means of magnetic force in one direction and means of form-closed contact, e.g. stops, in the opposite direction.

18. Method according to one of claims 1 to 17, **characterised in that** an optical measuring system (40) is held on the holder (22) with a lighting device (4 1), mounting device (42) and screen (43) with an enlarged display of the mounting area.

19. Method according to one of claims 1 to 18, **characterised in that** by adjusting the contact piece (25) sitting on the tool (13) relative to the holder (22) with the measuring system (40) the optical measuring system (40) can be adjusted by optical scanning of a predetermined reference dimension of the tool (13), e.g. the tip of a drill, the highest blade of a milling machine, the first or second step of a stepping tool or similar size-determining edge of the tool (13).

20. Method for the force-closed clamping of a tool (13) with its shaft (12) in a bore (11) of a tool mount (10) by shrinking by means of heating and cooling the latter, whereby the axial insertion depth of the shaft (12) into the bore (11) is previously determined by adjustment, **characterised in that** the tool (13) with its shaft (12) is inserted into a support bore (14) of a support, in particular a tool mount (10), that is coaxially centring relative to the free end of the bore (11) of the tool mount (10), whereby the tool mount (10) is in the not-heated state, **in that** a movable holder (22) with a contact piece (25) is placed on one end of the tool (13) and the position of the contact piece (25) sitting on the tool (13) is adjusted, preferably finely adjusted, **in that** afterwards the opposite end of the tool (13) with a measuring device (50) is scanned in opposite direction for inserting the tool (13) into the bore (11) of the tool mount (10) until contact is made and this position of the measuring device (50) is secured, and **in that** after this the heating of the tool mount (10) is commenced with an associated axial insertion of the tool (13) with its shaft (12) into the bore (11) of the tool mount (10) until the end of the tool (13) reaches the measuring device (50), and **in that** after this the heating of the tool mount (10) is stopped.

21. Method according to claim 20, **characterised in that** on the basis of the adjustment of the contact piece (25) and the measuring device (50) a desired stop position for measuring device (50) is determined, which corresponds to the later desired position of the tool (13) in the tool holder (10).

## Revendications

1. Procédé de serrage par force d'adhérence d'un outil (13) par sa tige (12) dans un alésage (11) d'un logement d'outil (10) par contraction par chauffage et refroidissement de ce dernier, dans lequel la profondeur d'emmanchement axiale de la tige (12) dans l'alésage (11) est prédéfinie par réglage,
**caractérisé en ce**
**que** l'outil (13) est supporté coaxialement par rapport au logement d'outil (10) et qu'une pièce de contact mobile (25) est amenée au contact de l'extrémité libre de l'outil (13) pour le positionnement de ce dernier, que l'outil (13) est sollicité par une force antagoniste (33) agissant en sens contraire de sa pénétration dans l'alésage (11) du logement d'outil (10) et agissant à l'encontre de la pièce de contact (25) mise en place, qu'ensuite le chauffage est démarré et l'outil (13) reste maintenu, pendant que le chauffage est en marche, entre la pièce de contact (25) et la force antagoniste (33) agissant en sens contraire de cette dernière, avec pénétration axiale simultanée de la tige (12) dans l'alésage (11) du logement d'outil (10), et que le chauffage est stoppé après l'obtention d'une cote de consigne (s) prédéfinie lors de la pénétration de la tige (12) dans l'alésage (11) du logement d'outil (10).

2. Procédé suivant la revendication 1,
**caractérisé en ce**
**qu'**une butée (28) qui est associée à la pièce de contact (25), en particulier à un dispositif de maintien mobile (22) de la pièce de contact (25), est réglée et fixée sur une cote de consigne prédéfinie.

3. Procédé suivant l'une des revendications 1 et 2,
**caractérisé en ce**
**que** l'outil (13) est introduit par sa tige (12) dans un trou d'appui de centrage (14) d'un appui, en particulier du logement d'outil (10), coaxial à l'extrémité libre de l'alésage (11) du logement d'outil (10), le logement d'outil (10) se trouvant alors dans l'état non chauffé, que le dispositif de maintien (22) est mis en place par sa pièce de contact (25) sur l'outil (13), que la force antagoniste (33) sollicitant l'outil (13) en sens contraire de sa pénétration dans l'alésage (11) du logement d'outil (10) est activée, et ainsi le serrage de l'outil (13), et le chauffage du logement d'outil (10) est démarré avec pénétration axiale simultanée de l'outil (13) par sa tige (12) dans l'alésage (11) du logement d'outil (10) jusqu'à ce que le dispositif de maintien (22) bute sur la butée (28), et que le chauffage du logement d'outil (10) est ensuite stoppé et l'effet de la force antagoniste (33) supprimé après le refroidissement.

4. Procédé suivant l'une des revendications 1 à 3,
**caractérisé en ce**
**que** la position de la pièce de contact (25) reposant sur l'outil (13) est ajustée par rapport au dispositif de maintien (22) et de surcroît la position du dispositif de maintien (22) par rapport à la butée (28), de préférence réglées finement, avant que le chauffage du logement d'outil (10) soit démarré.

5. Procédé suivant l'une des revendications 1 à 4,
**caractérisé en ce**
**que** la butée (28) est ajustée par rapport à une représentation de cotes (29), par exemple une échelle graduée, pour le réglage de la cote de consigne (s), en particulier ajustée finement, et est fixée, par exemple bloquée, dans sa position réglée par rapport à la représentation de cotes (29).

6. Procédé suivant l'une des revendications 1 à 5,
**caractérisé en ce**
**que** lors de la pénétration axiale de la tige (12) de l'outil (13) dans l'alésage (11) du logement d'outil (10), à l'obtention de la cote de consigne (s), en particulier lors de la butée du dispositif de maintien (22, 31) sur la butée (28), un contact de commutation électrique est fermé au moyen duquel est coupée l'alimentation, en particulier en énergie électrique, pour le chauffage du logement d'outil (10).

7. Procédé suivant l'une des revendications 1 à 6,
**caractérisé en ce**
**qu'**au moins la zone (27) de la pièce de contact (25) qui parvient au contact de l'outil (13), par exemple.de la pointe, du tranchant de ce dernier, ou analogue, est formée d'un matériau plus flexible, par exemple plus mou, que le matériau de l'outil (13), par exemple de caoutchouc, matière plastique ou matériau analogue élastique à la manière d'un ressort, ou d'une partie (27) suspendue par ressorts.

8. Procédé suivant l'une des revendications 1 à 27,
**caractérisé en ce**
**que** la force antagoniste (33) est produite au moyen d'un coussin de gaz comprimé, qui est maintenu à l'intérieur de l'alésage (11) du logement d'outil (10).

9. Procédé suivant la revendication 8,
**caractérisé en ce**
**que** le coussin de gaz comprimé reste maintenu jusqu'à ce que, après la fin du chauffage du logement d'outil (10), ce dernier soit refroidi pendant un temps de maintien consécutif.

10. Procédé suivant l'une des revendications 8 et 9,
**caractérisé en ce**
**que** pour produire le coussin de gaz comprimé, un gaz comprimé, par exemple de l'air comprimé, est introduit dans l'alésage (11) du logement d'outil (10), par exemple par des conduits d'agent réfrigérant présents en cet endroit.

11. Procédé suivant l'une des revendications 8 à 10,
**caractérisé en ce**
**que**, pour produire le coussin de gaz comprimé pour des outils (13) qui comportent des conduits intérieurs d'agent réfrigérant, une régulation du débit volumique du gaz comprimé est assurée, par exemple par l'intermédiaire d'un étranglement, jusqu'à ce que la pression de gaz requise soit atteinte.

12. Procédé suivant l'une des revendications 1 à 11,
**caractérisé en ce**
**que** la grandeur de la force antagoniste (33), en particulier du coussin de gaz comprimé, est réglée de telle sorte qu'elle est supérieure au poids antagoniste d'un outil (13) pouvant être logé dans l'alésage (11) du logement d'outil (10).

13. Procédé suivant l'une des revendications 1 à 11,
**caractérisé en ce**
**que** la grandeur de la force antagoniste (33) est modifiée en adaptation à des outils (13) de géométrie différente.

14. Procédé suivant la revendication 13,
**caractérisé en ce**
**que** pour l'adaptation, le poids de chaque outil (13) introduit est déterminé par pesage au moyen d'un dispositif de pesée (35) et la grandeur de la force antagoniste (33) est prédéfinie en adaptation à ce poids.

15. Procédé suivant l'une des revendications 1 à 14,
**caractérisé en ce**
**que** le dispositif de maintien (22) avec la pièce de contact (25) est déplacé par gravité et/ou manuellement et/ou à l'aide de moyens de transmission et/ou d'un mécanisme de commande ou analogue.

16. Procédé suivant la revendication 15,
**caractérisé en ce**
**que** le déplacement du dispositif de maintien (22) s'effectue de telle sorte que la pièce de contact (25) exécute un déplacement linéaire à peu près coaxial ou parallèle à l'axe longitudinal de l'outil (13) et/ou transversalement à ce dernier.

17. Procédé suivant l'une des revendications 15 et 16,
**caractérisé en ce**
**que** le dispositif de maintien (22) et la butée réglable (28) sont couplés ou peuvent être couplés entre eux pour un mouvement de réglage de la butée (28) par un déplacement du dispositif de maintien (22) dans les deux sens de déplacement, par exemple par force magnétique dans un sens et par contact par coopération de forme, par exemple par butée, dans le sens opposé.

18. Procédé suivant l'une des revendications 1 à 17,
**caractérisé en ce**
**qu'**un système de mesure optique (40) avec dispositif d'éclairage (41), dispositif de prise de vue (42) et écran (43) avec reproduction agrandie de la zone de prise de vue est maintenu sur le dispositif de maintien (22).

19. Procédé suivant l'une des revendications 1 à 18,
**caractérisé en ce**
**que**, par ajustage de la pièce de contact (25) reposant sur l'outil (13) par rapport au dispositif de maintien (22) avec système de mesure (40), un réglage du système de mesure optique (40) est assuré avec balayage optique d'une géométrie de référence prédéfinie de l'outil (13), par exemple de la pointe d'un foret, du tranchant le plus haut d'une fraise, du premier ou du second gradin d'un outil étagé ou d'une arête analogue dimension-nellement caractéristique de l'outil (13).

20. Procédé de serrage par force d'adhérence d'un outil (13) par sa tige (12) dans un alésage (11) d'un logement d'outil (10) par contraction par chauffage et refroidissement de ce dernier, dans lequel la profondeur d'emmanchement axiale de la tige (12) dans l'alésage (11) est prédéfinie au préalable par réglage,
**caractérisé en ce**
**que** l'outil (13) est introduit par sa tige (12) dans un trou d'appui de centrage (14) d'un appui, en particulier du logement d'outil (10), coaxial à l'extrémité libre de l'alésage (11) du logement d'outil (10), le logement d'outil (10) se trouvant alors dans l'état non chauffé, qu'un dispositif de maintien mobile (22) est mis en place par une pièce de contact (25) sur une extrémité de l'outil (13) et la position de la pièce de contact (25) reposant sur l'outil (13) est ajustée, de préférence réglée finement, que l'extrémité opposée de l'outil (13) est balayée jusqu'au contact par un élément de mesure (50) en sens contraire de la pénétration de l'outil (13) dans l'alésage (11) du logement d'outil (10) et cette position de l'élément de mesure (50) est fixée, et que le chauffage du logement d'outil (10) est ensuite démarré avec pénétration axiale simultanée de l'outil (13) par sa tige (12) dans l'alésage (11) du logement d'outil (10) jusqu'à ce que l'outil (13) bute par son extrémité sur l'élément de mesure (50), et que le chauffage du logement d'outil (10) est ensuite stoppé.

21. Procédé suivant la revendication 20,
**caractérisé en ce**
**qu'**à partir de la position de la pièce de contact (25) et de l'élément de mesure (50) est déterminée et réglée pour l'élément de mesure (50) une position de butée de consigne qui correspond à la position de consigne ultérieure de l'outil (13) dans le logement d'outil (10).
